(19) Europäisches Patentamt
European Patent Office
Office européen des brevets

(11) **EP 4 637 005 A2**

(12) **EUROPEAN PATENT APPLICATION**

(43) Date of publication:
22.10.2025 Bulletin 2025/43

(51) International Patent Classification (IPC):
**H02K 33/16** (2006.01)

(21) Application number: 25165542.9

(22) Date of filing: 24.03.2025

(52) Cooperative Patent Classification (CPC):
**H02K 33/16**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 26.03.2024 IN 202411023800
26.03.2024 IN 202411023885
22.01.2025 US 202519033642

(71) Applicant: Honeywell International Inc.
Charlotte, NC 28202 (US)

(72) Inventors:
• YADAV, Govind
Charlotte, 28202 (US)
• ANANDA, Varun
Charlotte, 28202 (US)
• P, Jayanth
Charlotte, 28202 (US)
• K, Seenu
Charlotte, 28202 (US)
• MADKE, Pranita
Charlotte, 28202 (US)

(74) Representative: Ingrassia, Fisher & Lorenz UK
Ltd.
Cambridge House
Henry Street
Bath BA1 1BT (GB)

(54) **HIGH VOLTAGE, HIGH TEMPERATURE CAPABLE VOICE COIL ACTUATOR**

(57) A voice coil actuator assembly includes a housing assembly, a magnet assembly, a bobbin, and a plurality of coils. The magnet assembly is disposed within, and is movable relative to, the housing assembly and includes a plurality of permanent magnets. The bobbin is fixedly mounted within the housing assembly and surrounds the magnet assembly. The bobbin includes a plurality of winding cavities. Each winding cavity is at least partially coated with a dielectric coating material and has a bottom surface and two side walls. The coils are electrically connected in series. Each coil is wound on the bobbin and is disposed, one each, within a different one of the winding cavities. Each coil comprises magnet wire coated with the dielectric coating material. When the coils are electrically energized, a linear force is generated that causes relative motion between the magnet assembly and the housing assembly.

FIG. 1

## Description

CROSS REFERENCE TO RELATED APPLICATION

The present application claims benefit of prior filed India Provisional Patent Application No. 202411023800, filed March 26, 2024, and prior filed India Provisional Patent Application No. 202411023885, filed March 26, 2024, both of which are hereby incorporated by reference in their entirety.

TECHNICAL FIELD

The present disclosure relates to actuators and more particularly to a high voltage direct drive actuator, such as a voice coil actuator, that exhibits improved performance and can operate at high voltage and high temperature environments.

BACKGROUND

Actuators are used in myriad devices and systems. For example, many vehicles such as, for example, aircraft, spacecraft, watercraft, and numerous other terrestrial and non-terrestrial vehicles, include one or more actuators to position various control surfaces, valves, or other components. One particular type of actuator that is used is a voice coil actuator.

A voice coil actuator, which may also be referred to as a non-commutated DC linear actuator or a direct drive actuator, can provide low friction, reduced part count, direct drive, high precision control, and improved reliability. A voice coil actuator typically includes a permanent magnet assembly and a coil assembly. The permanent magnet assembly includes a ferrous steel back-iron and a permanent magnet. The coil assembly includes a coil wound onto a bobbin. When the coil is supplied with current, the electromagnetic field interacts with the magnetic field and generates a force in a direction that is perpendicular to the direction of current flow in the coil.

Although presently known voice coil actuators are generally reliable and robust, these known actuators can exhibit certain drawbacks. For example, presently known voice coil actuators do not generate a force of sufficient magnitude to position some components in certain systems, while simultaneously conforming to required size and weight requirements. To do so, the voice coil actuators need to operate at relatively high voltages (e.g., 900V) and at relatively high temperatures (e.g., 400C-800C). This, however, can create thermal issues with the permanent magnets, which can be a limiting factor.

Hence, there is a need for a voice coil actuator that can generate a relatively high-magnitude force, as compared to presently known voice coil actuators, while simultaneously conforming to required size and weight requirements, and that includes a suitable thermal management design to allow operation at high voltages and high temperatures. The present disclosure addresses at least this need.

BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, a voice coil actuator assembly includes a housing assembly, a magnet assembly, a bobbin, and a plurality of coils. The magnet assembly is disposed within, and is movable relative to, the housing assembly and includes a plurality of permanent magnets. The bobbin is fixedly mounted within the housing assembly and surrounds the magnet assembly. The bobbin includes a plurality of winding cavities. Each winding cavity is at least partially coated with a dielectric coating material and has a bottom surface and two side walls. The coils are electrically connected in series. Each coil is wound on the bobbin and is disposed, one each, within a different one of the winding cavities. Each coil comprises magnet wire coated with the dielectric coating material. When the coils are electrically energized, a linear force is generated that causes relative motion between the magnet assembly and the housing assembly.

Furthermore, other desirable features and characteristics of the voice coil actuator assembly will become apparent from the subsequent detailed description and the appended claims, taken in conjunction with the accompanying drawings and the preceding background.

BRIEF DESCRIPTION OF DRAWINGS

The present disclosure will hereinafter be described in conjunction with the following drawing figures, wherein like numerals denote like elements, and wherein:

FIG. 1 depicts a simplified cross section plan view of one embodiment of a voice coil actuator assembly;
FIGS. 2 and 3 depict plan views of different arrangements of permanent magnets that may be used in the voice coil actuator assembly of FIG. 1;
FIG. 4 depicts a simplified cross section plan view of another embodiment of a voice coil actuator assembly;
FIG. 5 depicts a simplified cross-sectional view of a portion of a bobbin assembly that may be included in the voice coil actuator assemblies of FIGS. 1 and 2;
FIG. 6 depicts a simplified cross-sectional view of a portion of the bobbin assembly of FIG. 5 illustrating how the coils may be wound thereon;
FIG. 7 depicts a side view of one embodiment of the bobbin of FIG. 5 showing physical features to facilitate coil winding directions;

FIG. 8 depicts a close-up perspective view of a portion of the bobbin illustrating the physical features in more detail;

FIG. 9 depicts a close-up perspective view of a portion of the bobbin illustrating protective sleeves;

FIG. 10 depicts a cross-sectional side view of a portion of the voice coil actuator assembly of FIG.1 illustrating various heat flow paths therein;

FIG. 11 depicts a plan view of one embodiment of a voice coil actuator assembly that has a plurality of triply periodic minimal surface gyroid fins coupled thereto;

FIG. 12 depicts a close-up plan view of a portion of the triply periodic minimal surface gyroid fins shown in FIG. 11;

FIGS. 13-15 depict various techniques by which the triply periodic minimal surface gyroid fins of FIGS. 11 and 12 may be coupled to the voice coil actuator assembly;

FIG. 16 depicts a cross-sectional side view of the voice coil actuator assembly of FIG.1 that has a plurality of lattice structures coupled to the bobbin;

FIG. 17 depicts a close-up cross-sectional side view of a portion of the voice coil actuator assembly of FIG.1 illustrating a gap between the coil case and the coils;

FIG. 18 depicts a close-up cross-sectional side view of a portion of the voice coil actuator assembly of FIG.1 that includes foil wraps to fill the gap depicted in FIG. 17;

FIG. 19 depicts a cross-sectional plan view of the voice coil actuator assembly of FIG.1 that includes alumina ceramic in the gap depicted in FIG. 17; and

FIG. 20 depicts a cross-sectional plan view of the voice coil actuator assembly of FIG.1 that includes a thermal sleeve around the magnet assembly;

DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

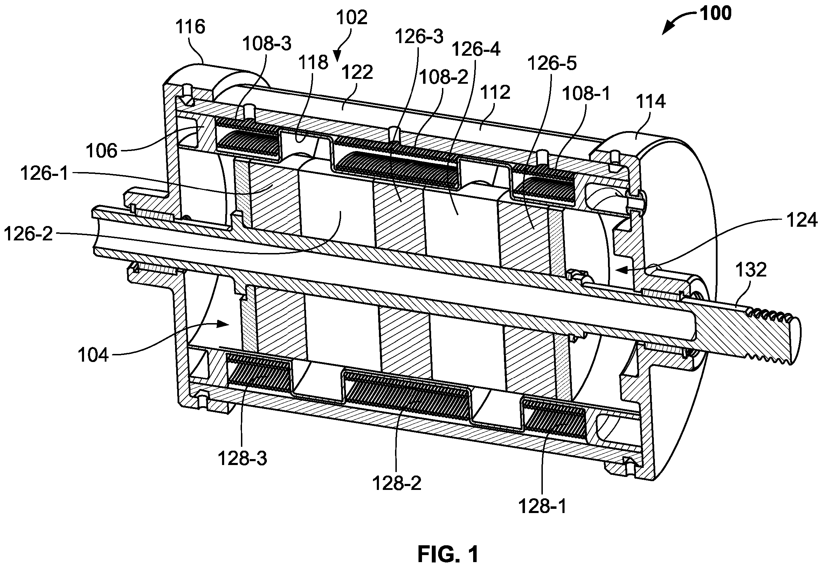

Referring to FIG. 1, a simplified cross section view of one embodiment of a voice coil actuator assembly 100 is depicted and includes a housing assembly 102, a magnet assembly 104, a bobbin 106, and a plurality of coils 108. In the depicted embodiment, the housing assembly 102, which is preferably formed at least partially of a ferrous material, includes coil case 112, a first end cap 114, and a second end cap 116. The coil case 112 surrounds the bobbin 106 and has an inner surface 118 and an outer surface 122. The inner surface 118 defines an internal cavity 124 that extends between the first end cap 114 and the second end cap 116.

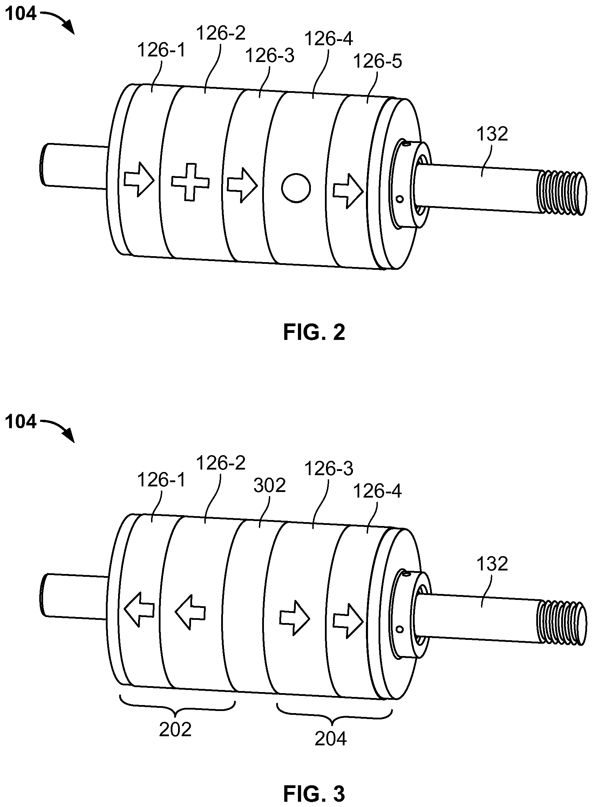

The magnet assembly 104 is disposed within, and is movable relative to, the housing assembly 102. The magnet assembly 104 includes a plurality of permanent magnets 126. In the embodiment depicted in FIG. 1, the plurality of permanent magnets includes five permanent magnets 126 (e.g., 126-1, 126-2, 126-3, 126-4, 126-5), three of which are axially magnetized (126-1, 126-3, 126-5) and two of which are radially magnetized (126-2, 126-4). It will be appreciated that this specific positioning of the permanent magnets 126 could be varied, as needed or desired. It will additionally be appreciated that the polarities and the arrangements of the permanent magnets 126 may vary. One particular arrangement of the polarities and the arrangements of the permanent magnets 126 is depicted in FIG. 2, which show the permanent magnets 126 arranged such that each radially magnetized magnet (126-2, 126-4) is disposed between two axially magnetized magnets (126-1, 126-3, 126-5).

It will additionally be appreciated that the magnet assembly 104 could, in other embodiments, include more or less than this number of total permanent magnets 126, and more or less than these specific numbers of axially and radially magnetized magnets 126. For example, in some embodiments, such as the one depicted in FIG. 3, the plurality of permanent magnets 126 includes a first set of axially magnetized permanent magnets 202 (e.g., 126-1, 126-2) and a second set of axially magnetized permanent magnets 204 (e.g., 126-3, 126-4). In this embodiment, the magnet assembly 104 additionally includes a magnetically permeable pole piece 302, which is disposed between the first and second sets 202, 204 of axially magnetized permanent magnets.

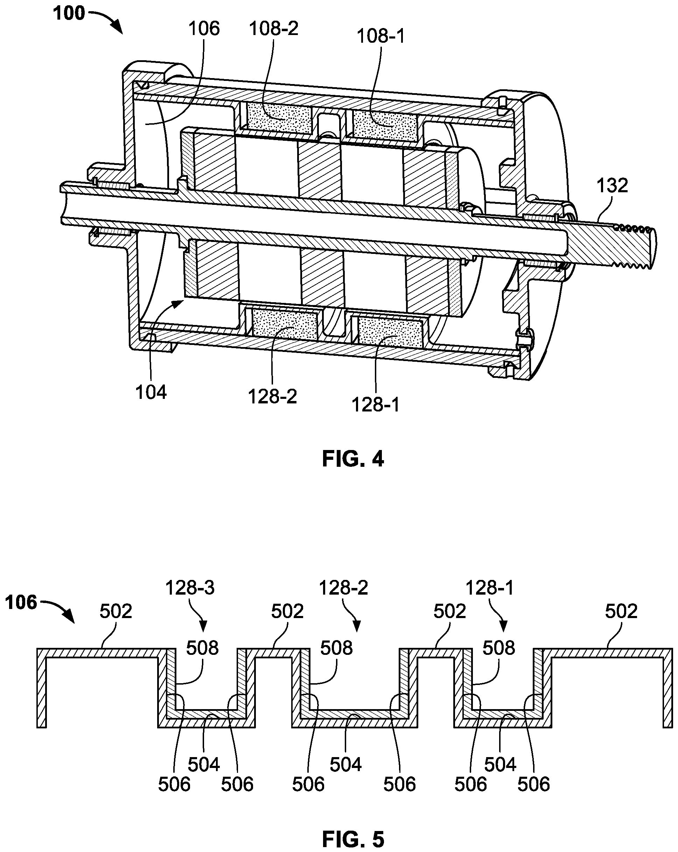

Returning now to FIG. 1, the bobbin 106 is fixedly mounted within the housing assembly 102 and surrounds the magnet assembly 104. The bobbin 106, in the depicted embodiment, is not moveable relative to the housing assembly 102, and includes a plurality of winding cavities 128. In the depicted embodiment, the bobbin 106 includes three winding cavities 128 (e.g., 128-1, 128-2, 128-3). However, it will be appreciated that in other embodiments, the bobbin 106 may be implemented with more than this number of winding cavities 128 or, as FIG. 4 depicts, it may be implemented with less than this number of winding cavities 128.

No matter the specific number of winding cavities 128, and as FIG. 5 illustrates, each winding cavity 128 is disposed between two cavity walls 502 and has a cavity bottom surface 504 and two cavity side surfaces 506. Each winding cavity 128 is additionally at least partially coated with a dielectric coating material 508. In particular, at least in the depicted embodiment, the cavity bottom surface 504 and cavity side surfaces 506 of each winding cavity 128 are coated with the dielectric coating material 508. It will be appreciated that the specific dielectric coating material 508 may vary. One example of a dielectric coating material that may be used is FARACORE™, which is manufactured and sold by Honeywell International, Inc.

Returning to FIG. 1, it is seen that the coils 108 are wound on the bobbin 106 and are disposed, one each, within a different one of the winding cavities 128. More specifically, the coils 108 are wound on the bobbin 106 using a single length of magnet wire and are thus electrically connected in series. Preferably, the magnet wire is also coated with the dielectric coating material 508. In the embodiment in FIG. 1, the voice coil actuator assembly 100 is implemented using three series-connected coils 108-1, 108-2, 108-3. It will be appreciated, however, that other embodiments could be implemented with more or less than three series-connected coils 108. For example, in the embodiment depicted in FIG. 4, the voice coil actuator assembly 100 is implemented using only two series-connected coils 108-1, 108-2.

As is generally known, with this type of actuator, when the coils 108 are electrically energized, a linear force is generated that causes the magnet assembly 104 to move relative to the housing assembly 102. Thus, in the depicted embodiment an output shaft 132 is also coupled to, or is formed integrally with, the magnet assembly 104. The output shaft 132 may be coupled to a component that the voice coil actuator assembly 100 is used to position. It will be appreciated that the magnitude of the linear force is dependent upon the magnitude of the current supplied to the coils 108. Moreover, the speed of movement can be controlled by varying the frequency of a pulsed DC voltage or the frequency of an AC voltage supplied to the coils 108.

Before proceeding further, it is noted that the magnet wire that is used for the coils 108 is preferably, though not necessarily, a high-temperature insulated magnet wire. It will be appreciated that the high-temperature insulated magnet wire may be any one of numerous known types of high-temperature insulated magnet wire. Some non-limiting examples include, but are not limited to, the high-temperature insulated magnet wire disclosed in U.S. Patent No. 8,484,831, the high-temperature insulated magnet wire disclosed in U.S. Patent No. 11,437,188, the high-temperature insulated magnet wire disclosed in U.S. Patent No. 7,795,538, or the high-temperature insulated magnet wire disclosed in U.S. Patent Application Serial No. 17/651,092, all of which are assigned to the Assignee of the instant application.

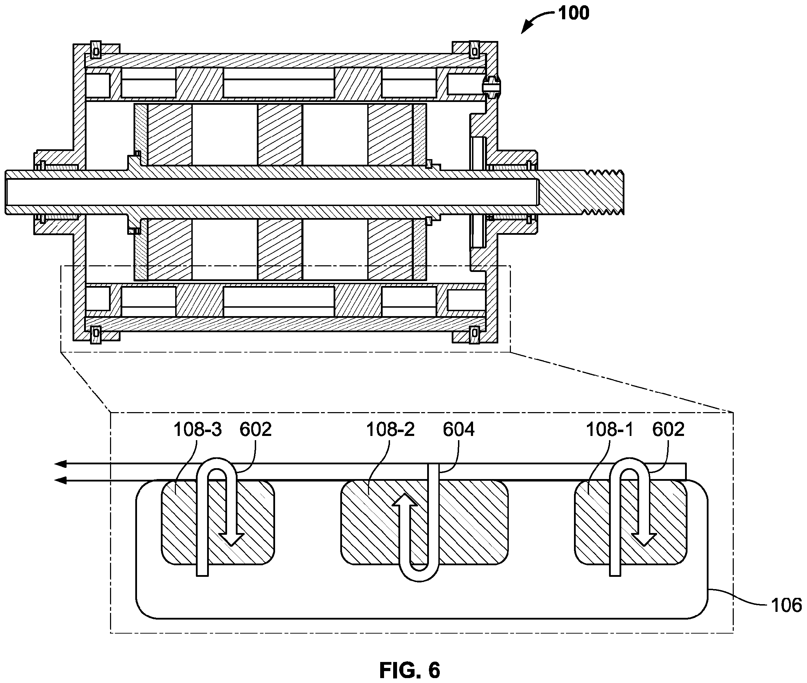

Returning now to the description, no matter the specific number of coils 108 that are included and/or specific magnet wire that is used, it is noted that each coil 108 has at least one adjacent coil and, as depicted most clearly in FIG. 6, each coil 108 is wound on the bobbin 106 in an associated winding direction that is opposite to that of its at least one adjacent coil 108. So, for example, in the embodiment depicted in FIG. 6, coil 108-1 is wound on the bobbin 106 in a first direction 602 (e.g., clockwise direction), coil 108-2, which is adjacent to coil 108-1, is wound in a second direction 604 (e.g., counterclockwise direction), and coil 108-3, which is adjacent to coil 108-2, is wound in the first direction 602 (e.g., clockwise direction).

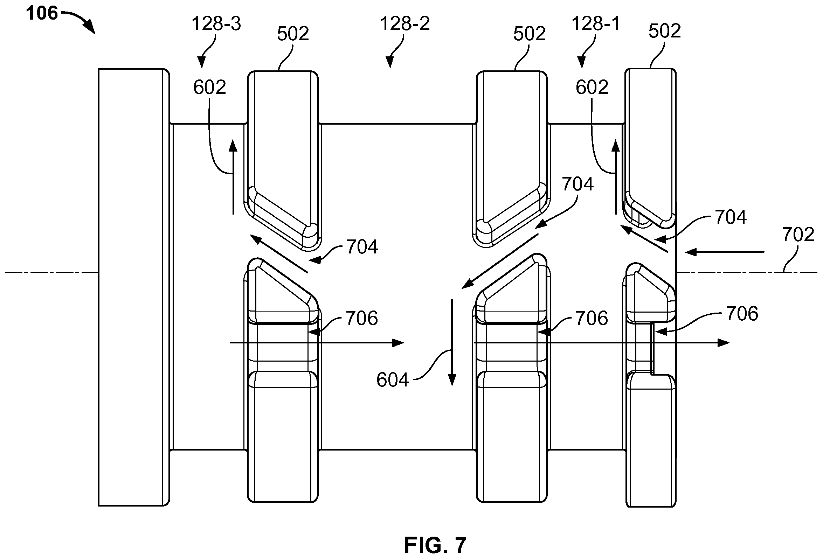

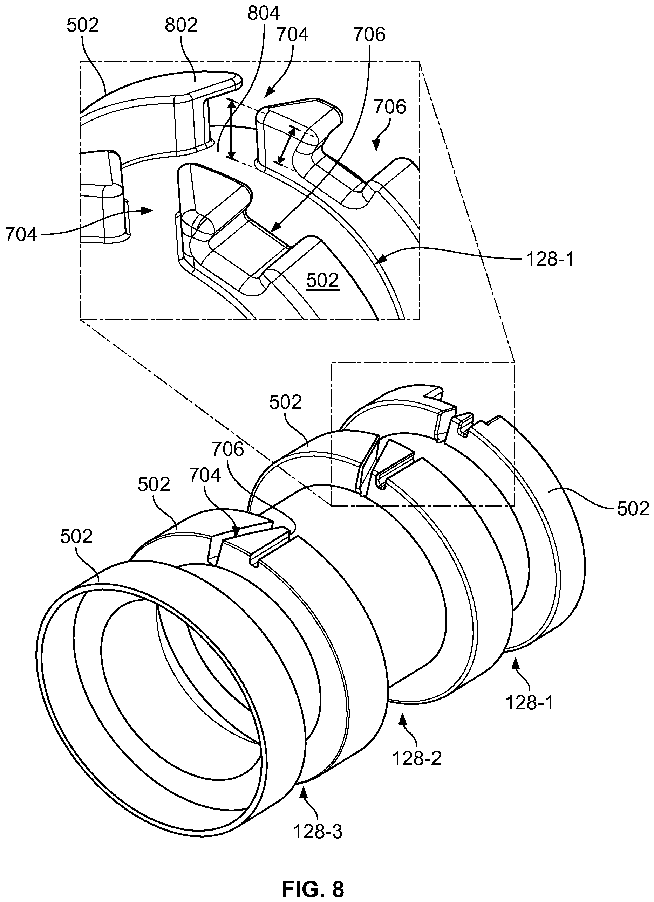

To help facilitate the variation in winding directions of adjacent coils 108, the bobbin 106 is uniquely configured. More specifically, and as FIGS. 7 and 8 depict, the bobbin 106, which is formed axially symmetric about a longitudinal axis of symmetry 702, includes a plurality of winding direction slots 704 and a plurality of wire return slots 706. As noted above, each winding cavity 128 is defined between two cavity walls 502. Thus, as may be appreciated, the total number (M) of cavity walls 502 will depend upon the number (N) of winding cavities 128 (and vice-versa), but will always be one greater than the number of winding cavities 128 (e.g., M>N). In the depicted embodiment, this means there are four cavity walls 502 (e.g., M=4) and three winding cavities 128 (e.g., N=3). The number of winding direction slots 704 and wire return slots 706 may also vary, but are always equal to the number (N) of winding cavities 128. Thus, in the depicted embodiment, there are three winding direction slots 704 and three wire return slots 706 (e.g., N=3).

Regardless of the specific number (N) of winding direction slots 704 and wire return slots 706, it is seen that each winding direction slot 704 extends through a different one of the cavity walls 502 in a non-zero angular direction relative to the longitudinal axis of symmetry 702, and each wire return slot 706 is formed in a different one of the cavity walls 502 and is disposed parallel to the longitudinal axis of symmetry 702. Although the specific values of the non-zero angles may vary, and as FIG. 7 further illustrates, the non-zero angular direction indicates the associated winding direction. Moreover, as depicted most clearly in FIG. 8, the depths of the winding direction slots 704 and the wire return slots 706 differ. The winding direction slots 704 extend from the top 802 of the cavity wall 502 all the way to the bottom 804 of the cavity wall 502, so as to be coextensive with the adjacent winding cavities 128. Conversely, the wire return slots 706 only extend partially into the cavity wall 502, to a depth that is less than the winding direction slots 704.

As FIG. 8 also depicts, the edges of the winding direction slots 704 and the wire return slots 706 are preferably rounded. In one embodiment, the edges are rounded to a radius (R) that is at least partially dependent on the magnet wire that is used to implement the coils. More specifically, the radius preferably, though not necessarily meets the following criterion:

$$R > 2(WD + 2*IT + 2*DT),$$

where:

WD = wire thickness
IT = insulation thickness
DT = dielectric thickness.

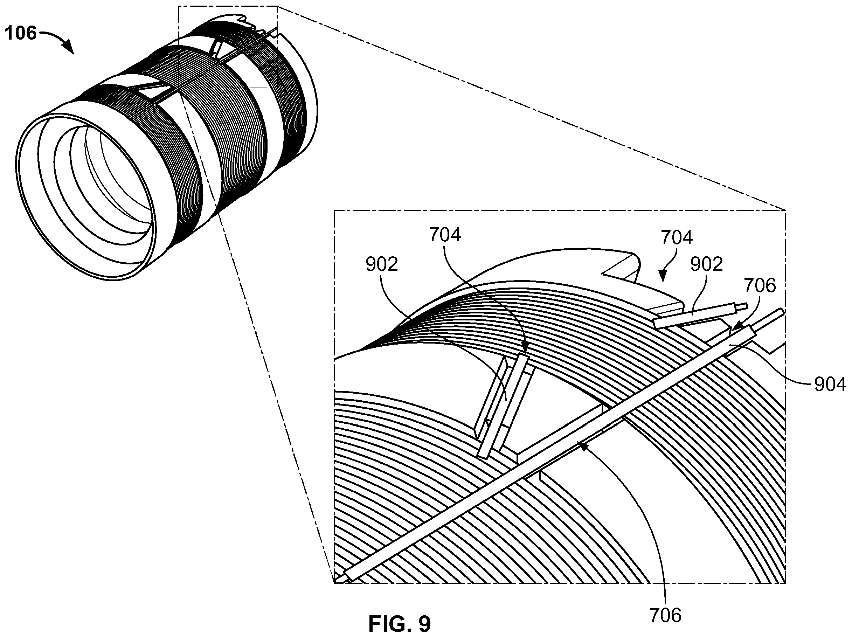

Turning now to FIG. 9, it is noted that although the rounding of the winding direction slots 704 and the wire return slots 706 provides significant protection to the wires that pass therethrough, the voice coil actuator assembly 100 may additionally include a plurality of protective sleeves. As depicted in FIG. 9, the protective sleeves include at least a plurality of winding direction protective sleeves 902. Each of the winding direction protective sleeves 902 (only one shown in FIG. 9) is disposed within a different one of the winding direction slots 704 and has the magnet wire extending therethrough. As FIG. 9 also depicts, the voice coil actuator assembly 100 may additionally include a wire return protective sleeve 904 that is disposed within each of the wire return slots 706. Although the make-up of the protective sleeves 902, 904 may vary, in one particular embodiment, each comprises a braided alumina sleeve that is coated with the dielectric coating.

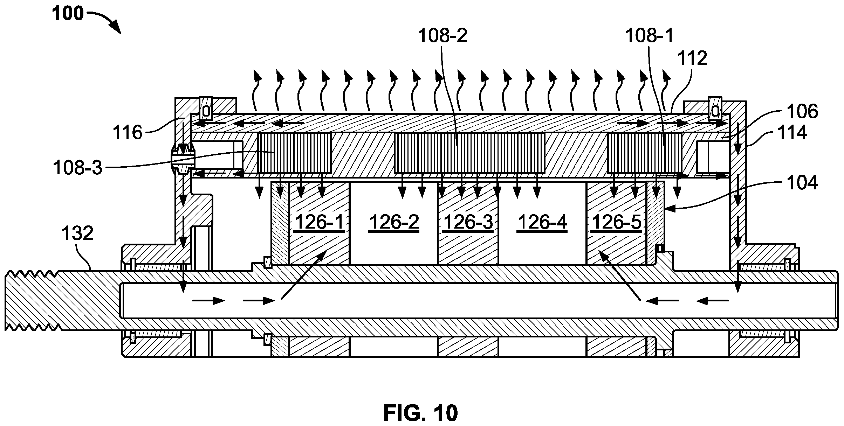

In addition to each of the above-described features that improve performance of the voice coil actuator assembly 100 at relatively high voltages (e.g., 900V) the voice coil actuator assembly 100 may additionally include various thermal management features that allow operation at relatively high ambient temperatures (e.g., ≥ 400C). These features may be needed because, for example, at these relatively high ambient temperatures, the temperature of certain components within the voice coil actuator assembly 100, such as the permanent magnets 126, may increase to twice the ambient temperature. This, in part, is due to the heat generated by the coils 108 being transferred to the permanent magnets. For example, as illustrated in FIG. 10, heat generated in the coils 108 is transferred, via conduction, to the bobbin 106, the first and second end caps 114, 116, and the output shaft 132, to the permanent magnets 126. In addition, heat generated in the coils 108 is transferred, via conduction, to the bobbin 106, and is further transferred to the permanent magnets 126, via radiation across the airgap between the bobbin 106 and the permanent magnets 126. As FIG. 10 also shows, although the coil case 112 may provide some convection heat transfer, its surface area is not sufficient to transfer away adequate amounts of heat.

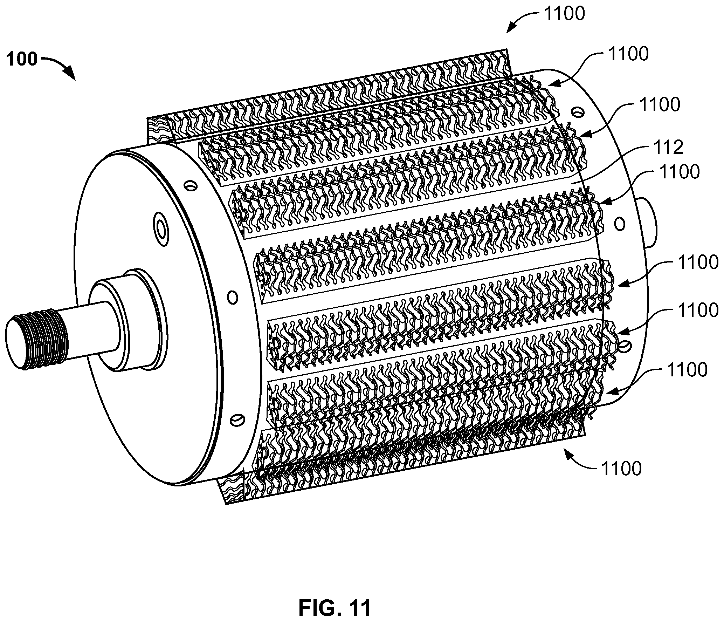

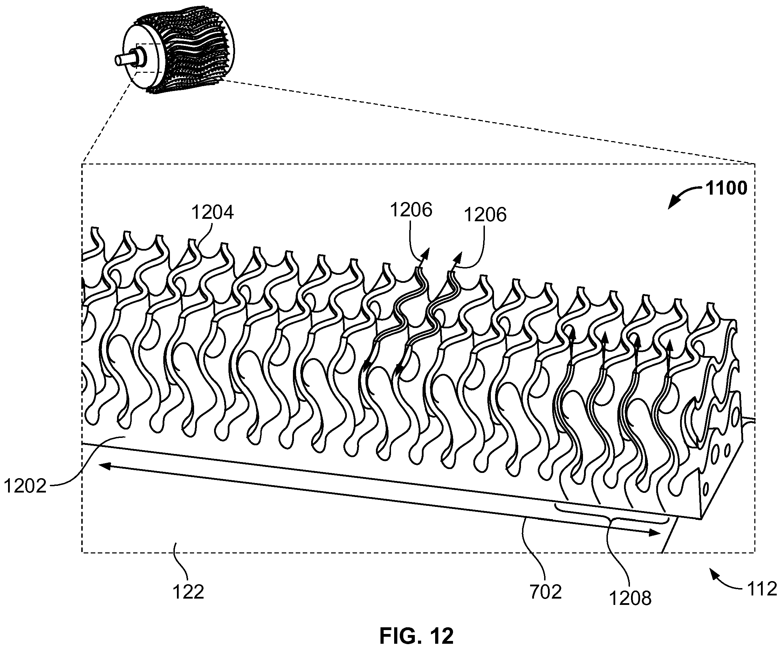

With the above in mind, and with reference now to FIG. 11, it is seen that the voice coil actuator assembly 100 may additionally include a plurality of spaced-apart triply periodic minimal surface (TPMS) gyroid fins 1100. The TPMS gyroid fins 1100, when included, are in contact with, and extend radially outward from, the outer surface 122 of the coil case 112. Although the configuration of the TPMS gyroid fins 1100 may vary, in the depicted embodiment, which is shown more clearly n FIG. 12, each TPMS gyroid fin 1100 extends radially outwardly from a fixed end 1202 to a free end 1204. The fixed end 1202 of each TPMS gyroid fin 1100 is fixedly coupled to the outer surface 122 of the coil case 112, and each TPMS gyroid fin 1100 has an axial thickness that decreases between the fixed end 1202 and the free end 1204. In addition, it is seen that each TPMS gyroid fin 1100 has a non-linear cross-sectional shape that extends in a direction (e.g., gyroid flow direction) that is perpendicular to the longitudinal axis of symmetry 702.

The use of the TPMS gyroid fins 1100 provides significant heat transfer improvements. For example, the use of the TPMS gyroid fins 1100 maximizes heat transfer in the radial outward direction (as illustrated using arrows 1206) and minimizes heat flow along the longitudinal direction (as illustrated using arrow 1208). Some preliminary thermal models indicate that use of the TPMS gyroid fins 1100 can reduce the temperature of the permanent magnets by about 110°C.

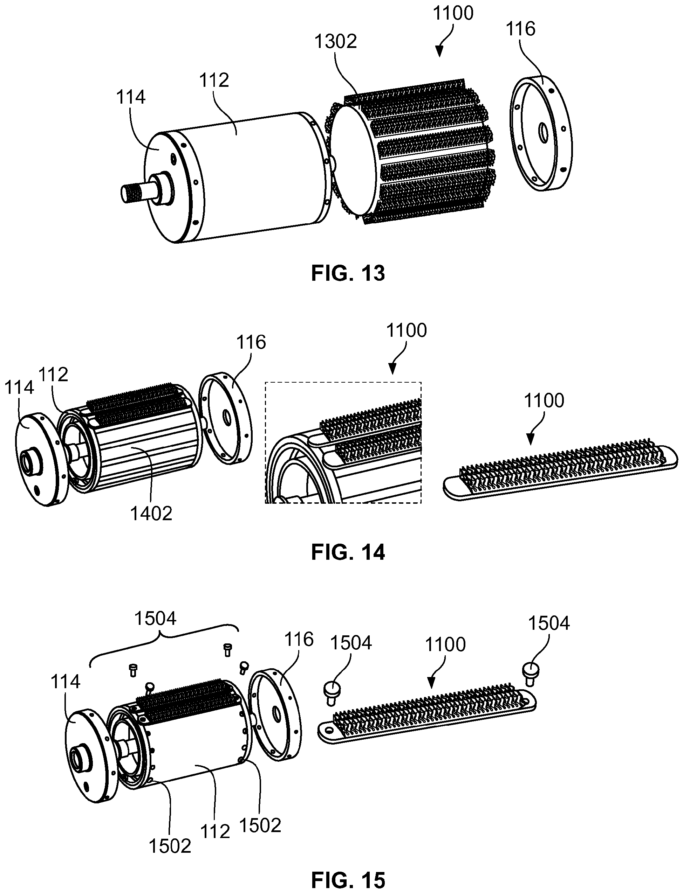

The TPMS gyroid fins 1100 may be coupled to the outer surface 122 of the coil case 112 using various techniques. For example, one technique, which is depicted in FIG. 13, is to manufacture, via 3-D printing (for example), a thin-walled cylinder 1302 having the TPMS gyroid fins 1100 thereon, and then press-fitting the cylinder 1302 onto the the coil case 112. Another technique, which is depicted in FIG. 14, is to manufacture a plurality of sets of the TPMS gyroid fins 1100, via 3-D printing (for example), and manufacture the coil case 112 to have a plurality of slots 1402. Each set of TPMS gyroid fins 1100 is then secured to the coil case 112 by inserting each set of TPMS gyroid fins 1100 into a different one of the slots 1402. Yet another technique, which is depicted in FIG. 15, is to manufacture a plurality of sets of the TPMS gyroid fins 1100, via 3-D printing (for example), and manufacture the coil case 112 to include a plurality of fastener openings 1502. Each set of TPMS gyroid fins 1100 is then secured to the coil case 112 via suitable fastener hardware 1504.

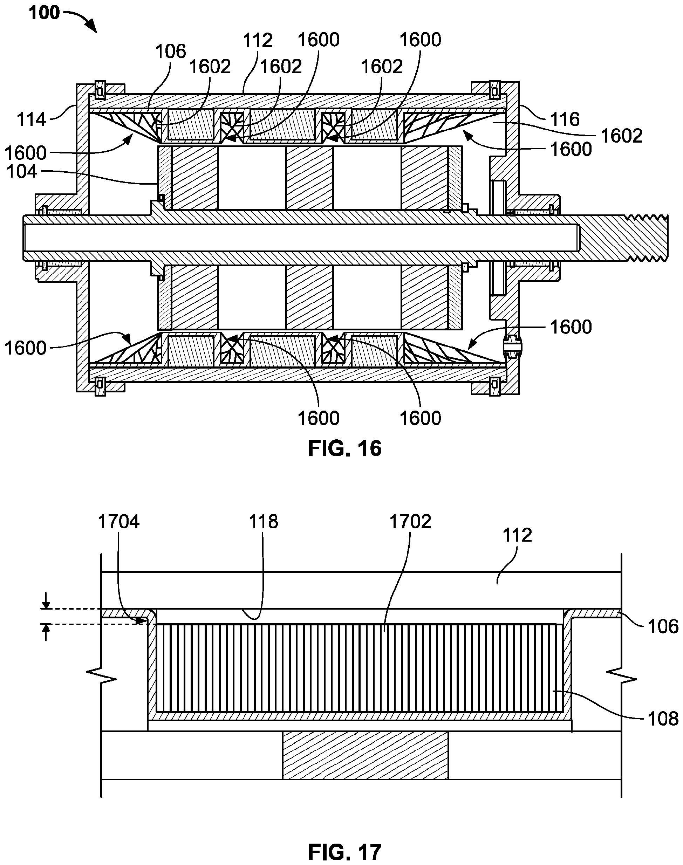

Referring now to FIG. 16, in another embodiment voice coil actuator assembly 100 may additionally include a plurality of lattice structures 1600. Although the number and location of each of the lattice structures 1600 may vary, in the depicted embodiment each lattice structure 1600 contacts the bobbin 106 and is disposed within each non-winding cavity 1602 (e.g., cavities not having coils 108 disposed therein). It is noted that some preliminary thermal models indicate that use of the lattice structures 1600 alone (i.e., not in combination with the TPMS gyroid fins 1100) can reduce the temperature of the permanent magnets by about 115°C.

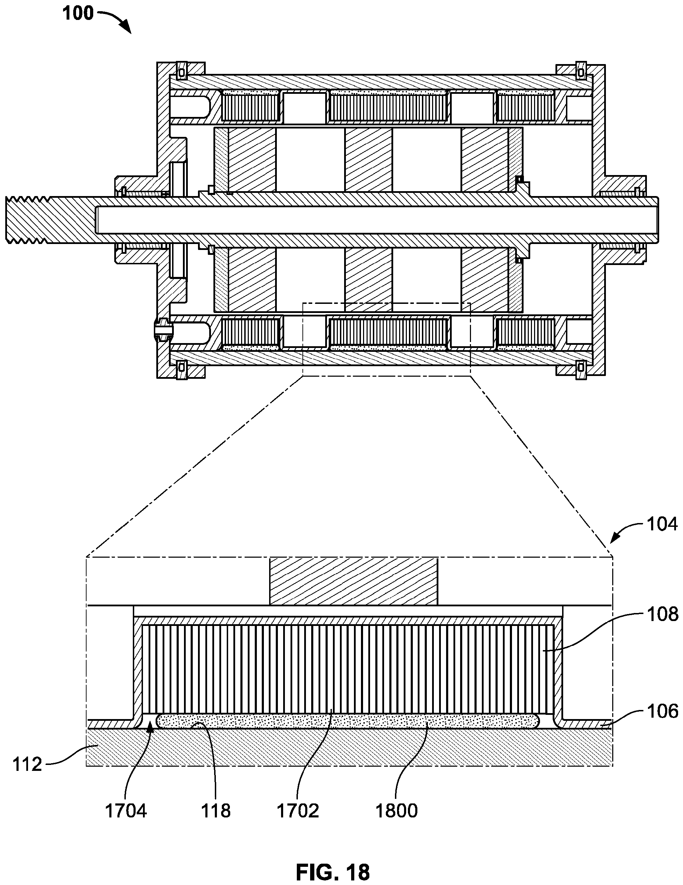

Typically, during assembly of the voice coil actuator assembly 100, the coil case 112 is press fit onto the bobbin 106. As may be appreciated, and as FIG. 17 depicts, this can leave a gap between the outer surface 1702 of each coil 108 and the inner surface 118 of the coil case 112. This gap, which is referred to herein as a coil cavity 1704, also exhibits inefficient heat transfer. Thus, as FIG. 18 depicts, in some embodiments, the voice coil actuator assembly may additionally include a plurality of metal foil wraps 1800. Each metal foil wrap 1800, when included is disposed within a different one of the coil cavities 1704 and contacts the outer surface 1702 of each coil 108 and the inner surface 118 of the coil case 112. It is noted that some preliminary thermal models indicate that use of the metal foil wraps 1800 alone (i.e., not in combination with the lattice structures 1600 or the TPMS gyroid fins 1100) can reduce the temperature of the permanent magnets by about 110°C.

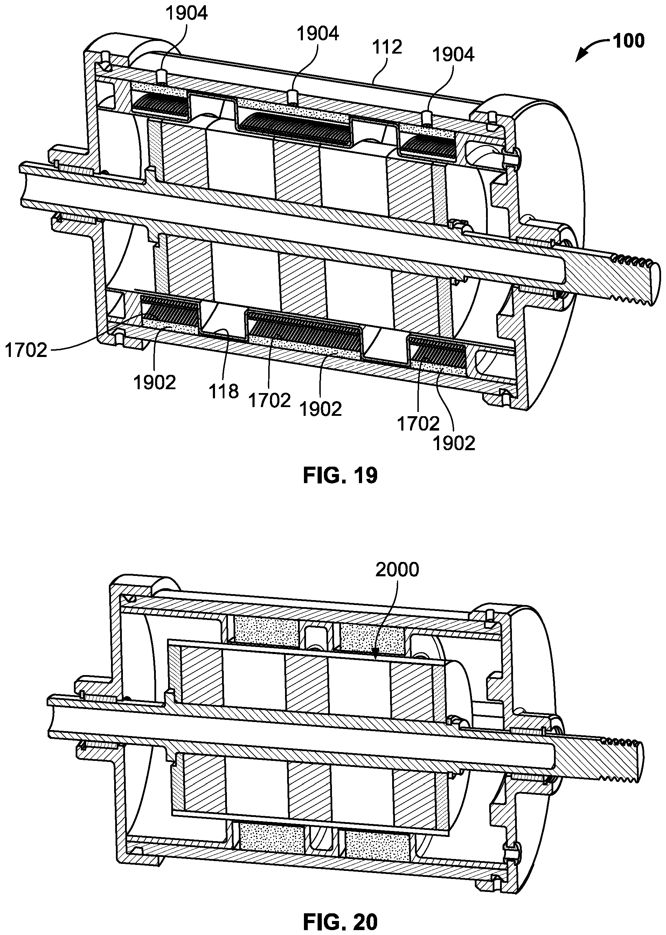

In yet another embodiment, which is depicted in FIG. 19, instead of disposing metal foil wraps 1800 into each coil cavity 1704, an alumina ceramic 1902 is disposed within each of the coil cavities 1704 and contacts the outer surface 1702 of each coil 108 and the inner surface 118 of the coil case 112. To facilitate this, and as FIG. 19 further depicts, the coil case 112 may include a plurality of openings 1904. These openings allow the alumina ceramic, in liquid form, to be poured into each of the coil cavities 1704.

In yet one additional embodiment, which is depicted in FIG. 20, a thermal insulating sleeve 2000 is disposed around and contacts the magnet assembly 104 and portions of the bobbin 106. The thermal insulating sleeve may be made of various types of materials. Some non-limiting examples of suitable materials include Macor®, which is a machinable glass-ceramic developed and sold by Corning Inc., $Al_2O_3$, and $ZrO_2$, just to name a few.

The voice coil actuator assembly disclosed herein various design features that allow operation at high voltages and high temperatures.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "axial" refers to a direction that is generally parallel to or coincident with an axis of rotation, axis of symmetry, or centerline of a component or components. For example, in a cylinder or disc with a centerline and generally circular ends or opposing faces, the "axial" direction may refer to the direction that generally extends in parallel to the centerline between the opposite ends or faces. In certain instances, the term "axial" may be utilized with respect to components that are not cylindrical (or otherwise radially symmetric). For example, the "axial" direction for a rectangular housing containing a rotating shaft may be viewed as a direction that is generally parallel to or coincident with the rotational axis of the shaft. Furthermore, the term "radially" as used herein may refer to a direction or a relationship of components with respect to a line extending outward from a shared centerline, axis, or similar reference, for example in a plane of a cylinder or disc that is perpendicular to the centerline or axis. In certain instances, components may be viewed as "radially" aligned even though one or both of the components may not be cylindrical (or otherwise radially symmetric). Furthermore, the terms "axial" and "radial" (and any derivatives) may encompass directional relationships that are other than precisely aligned with (e.g., oblique to) the true axial and radial dimensions, provided the relationship is predominantly in the respective nominal axial or radial direction. As used herein, the term "substantially" denotes within 5% to account for manufacturing tolerances. Also, as used herein, the term "about" denotes within 5% to account for manufacturing tolerances.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1.　A voice coil actuator assembly, comprising:

　　a housing assembly;
　　a magnet assembly disposed within, and movable relative to, the housing assembly, the magnet assembly including a plurality of permanent magnets;

a bobbin fixedly mounted within the housing assembly and surrounding the magnet assembly, the bobbin comprising a plurality of winding cavities, each winding cavity at least partially coated with a dielectric coating material and having a bottom surface and two side walls; and a plurality of coils electrically connected in series, each coil wound on the bobbin and disposed, one each, within a different one of the winding cavities, each coil comprising magnet wire coated with the dielectric coating material, wherein, when the coils are electrically energized, a linear force is generated that causes relative motion between the magnet assembly and the housing assembly.

2. The voice coil actuator assembly of claim 1, wherein the plurality of permanent magnets includes a plurality of axially magnetized permanent magnets and a plurality of radially magnetized permanent magnets.

3. The voice coil actuator assembly of claim 2, wherein each radially magnetized permanent magnet is disposed between two axially magnetized permanent magnets.

4. The voice coil actuator assembly of claim 1, wherein:

the plurality of magnets includes a first set of axially magnetized permanent magnets and a second set of axially magnetized permanent magnets; and

the magnet assembly further includes a magnetically permeable pole piece, the magnetically permeable pole piece disposed between the first set of axially magnetized permanent magnets and the second set of axially magnetized permanent magnets.

5. The voice coil actuator assembly of claim 1, wherein:

each coil has at least one adjacent coil; and each coil is wound on the bobbin in an associated winding direction that is opposite to that of its at least one adjacent coil.

6. The voice coil actuator assembly of claim 5, wherein: the bobbin assembly is formed axially symmetric about a longitudinal axis of symmetry:

the bobbin assembly includes M-number of sidewalls;

the bobbin assembly further includes N-number of winding direction slots and N-number of wire return slots;

each winding direction slot extends through a different one of the side walls in a non-zero angular direction relative to the longitudinal axis of symmetry;

each wire return slot is formed in a different one of the side walls and is disposed parallel to the longitudinal axis of symmetry; and

N is an integer, M is an integer, and M>N.

7. The voice coil actuator assembly of claim 6, wherein the non-zero angular direction of each winding direction slot indicates the associated winding direction.

8. The voice coil actuator assembly of claim 6, further comprising:

a plurality of winding direction protective sleeves, each winding direction protective sleeve coated with the dielectric coating and disposed within a different one of the winding direction slots and having the magnet wire extending therethrough.

9. The voice coil actuator assembly of claim 1, wherein:

the housing assembly comprises a coil case that surrounds the bobbin;

the coil case has an outer surface, and

the voice coil actuator assembly further comprises a plurality of triply periodic minimal surface (TPMS) gyroid fins in contact with, and extending radially outward from, the outer surface of the coil case.

10. The voice coil actuator assembly of claim 9, wherein

each TPMS gyroid fin extends radially outwardly from a fixed end to a free end;

the fixed end of each TPMS gyroid fin is fixedly coupled to the outer surface of the housing; and each TPMS gyroid fin has an axial thickness that decreases between the fixed end and the free end.

11. The voice coil actuator assembly of claim 9, wherein:

the coil case is disposed about a longitudinal axis of symmetry; and

each TPMS gyroid fin has a non-linear cross-sectional shape that extends in a direction that is perpendicular to the longitudinal axis of symmetry.

12. The voice coil actuator of claim 1, wherein:

the bobbin additionally includes a plurality of non-winding cavities; and

the voice coil actuator assembly further comprises a plurality of lattice structures, each lattice structure in contact with the bobbin and disposed within a different one of the non-winding cavities.

**13.** The voice coil actuator of claim 1, wherein:

the housing assembly comprises a coil case that surrounds the bobbin;
the coil case has an inner surface;
each coil, when wound on the bobbin, has a coil outer surface that is spaced apart from the inner surface of the coil case to define a coil cavity therebetween; and
the voice coil actuator assembly further comprises a plurality of metal foil wraps, each metal foil wrap disposed within a different one of the coil cavities and contacting the coil outer surface and the inner surface of the coil case.

**14.** The voice coil actuator of claim 1, wherein:

the housing assembly comprises a coil case that surrounds the bobbin;
the coil case has an inner surface;
each coil, when wound on the bobbin, has a coil outer surface that is spaced apart from the inner surface of the coil case to define a coil cavity therebetween; and
the voice coil actuator assembly further comprises alumina ceramic disposed within each of the coil cavities and contacting the coil outer surface and the inner surface of the coil case.

**15.** The voice coil actuator of claim 1, further comprising:
a thermal insulating sleeve disposed around and contacting the magnet assembly.

FIG. 1

**FIG. 2**

**FIG. 3**

**FIG. 4**

**FIG. 5**

**FIG. 6**

EP 4 637 005 A2

FIG. 7

**FIG. 8**

FIG. 9

FIG. 10

**FIG. 11**

FIG. 12

**FIG. 13**

**FIG. 14**

**FIG. 15**

**FIG. 16**

**FIG. 17**

**FIG. 18**

**FIG. 19**

**FIG. 20**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202411023800
- IN 202411023885
- US 8484831 B
- US 11437188 B
- US 7795538 B
- US 651092